(19) Europäisches Patentamt
European Patent Office
Office européen des brevets

(11) **EP 2 780 115 B1**

(12) **EUROPEAN PATENT SPECIFICATION**

(45) Date of publication and mention
of the grant of the patent:
**12.10.2016 Bulletin 2016/41**

(51) Int Cl.:
**B04B 5/04** *(2006.01)*  **B63J 4/00** *(2006.01)*
**C02F 1/34** *(2006.01)*

(21) Application number: **12791138.6**

(86) International application number:
**PCT/EP2012/072870**

(22) Date of filing: **16.11.2012**

(87) International publication number:
**WO 2013/072476 (23.05.2013 Gazette 2013/21)**

(54) **A LIQUID TREATMENT DEVICE**

FLÜSSIGKEITSBEHANDLUNGSVORRICHTUNG

DISPOSITIF DE TRAITEMENT DE LIQUIDES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **16.11.2011 EP 11189356**

(43) Date of publication of application:
**24.09.2014 Bulletin 2014/39**

(73) Proprietor: **PureteQ A/S
5700 Svendborg (DK)**

(72) Inventor: **SØGARD, Dennis
7600 Struer (DK)**

(74) Representative: **Valea AB
Anna Lindhs Plats 4
211 19 Malmö (SE)**

(56) References cited:
**WO-A1-2007/076579       JP-A- 2006 102 563
US-A1- 2003 057 163       US-A1- 2005 042 129**

## Description

FIELD OF THE INVENTION

A liquid treatment device for treatment of liquid contaminated with living organisms.

BACKGROUND

Modern ships and other floating vessels are often equipped with ballast tanks that hold water in order to maintain a proper stability of the vessel. The ballast tanks are usually positioned close to the bottom of the vessel and are often distributed along the port and starboard sides as well as in the bow and stern of a ship. Ballast tanks are also often in place in offshore platforms and a number of floating structures, such as floating wind turbines.

The ballast tanks may be filled or emptied in order to adjust the amount of ballast force on the vessel. For modern ships, such as cargo ships or freighters, the ballast force has to be adjusted during loading and offloading of the cargo, as the change of cargo loads alters the balance of the ship. In order to provide counterweight, ballast water is pumped into or out of the ballast tank in order to maintain the proper stability during loading and offloading. Furthermore, during transit between two places, ships burn a significant amount of fuel and the decrease in fuel often has to be counter balanced by pumping water into the ballast tank to maintain the proper stability.

When taking in ballast water, the floating vessel usually collects the ballast water from the surrounding water, where it is often pumped in large quantities into the ballast tanks of the vessel. In the opposite situation, where the ballast tanks are being emptied, the ballast water in the tanks is usually pumped into the surrounding water. Thus, a cargo vessel that travels between, e.g. Rotterdam in the Netherlands and Hong Kong, China, may take in ballast water in the port of Rotterdam and has to discharge the ballast water in the port of Hong Kong. This means that the water pumped up in the port of Rotterdam is introduced to the water in Hong Kong.

The introduction of alien ballast water in a foreign port may lead to an environmental pollution, as the water of one port may have a number of organisms that are not present in the destination port. Thus, when ballast water is discharged into a port different from than that which the ballast water was collected, the discharged ballast water introduces alien organisms to the water of the destination port. Such introduction may cause an unwanted imbalance in the eco system of the water at the destination, where an introduced organism, such as an alien algae, may disrupt the local eco system, i.e. the habitation of organisms in the seawater in Rotterdam is different from that of Hong Kong and the migration of organisms originating from one location in the world to another location in the world is considered as unfortunate and will probably be seen in the future as unacceptable under normal circumstances.

Thus, the national and international authorities dealing with ship traffic have introduced a requirement that ballast water in ships travelling between different eco systems has to be treated before the ballast water is introduced into a foreign body of water, i.e. the amount of organisms in the ballast water has to be eradicated or reduced to an acceptable level before the ballast water is pumped out of the ballast tanks.

A number of different types of liquid treatment systems have been developed in the recent past in order to reduce the amount of organisms that is present in ballast water. One of the major concerns regarding the treatment systems is the high throughput of liquids that has to be treated, as the ballast pumps must be able and are required to pump a significant amount of water in order to be able to create an equilibrium in a vessel relatively quickly.

Another important issue is the size and/or energy consumption of the treatment systems, as existing ships have to be retrofitted with a ballast water treatment system to comply with the international standards, such as the IMO standards, that are being put into place.

A number of different systems utilize active substances to treat ballast water, which may result in disadvantageous bi-products, where other systems utilise exposure to radiation, which may be seen as very energy consuming. Furthermore, due to the complexity of the existing water treatment systems, the systems are very expensive, where a single ballast water treatment system can cost anywhere between $175,000 up to $ 3 million based on the amount of pump capacity (Fredrick Royan, Shipping Industry Sets Sail: Multi-billion Dollar Ballast Water Treatment System Market, 1 June 2010, Frost & Sullivan Market Insight).

WO 2007/108012 discloses an apparatus for filtration and disinfection of a ship's ballast water based on hydrodynamic cavitation. The apparatus comprises a vortex diode with a tangential entry port and an axial outlet port with single or multiple bleeding holes, where the water may be re-circulated through the system for additional disinfection. The disinfection of the ship's ballast water is achieved through filtration and hydrodynamic cavitation. However, the drawback to such a system is that the system requires a pre-filtration to remove any large particles from the ballast water and any such filtration system may require a high degree of maintenance to keep the filtration system clean, such that it does not block the flow of water from the sea.

JP 2006 102563 discloses a treatment device for microorganisms in liquid, comprising a rotor and a stator, where the device comprises a plurality of rotor plates and a plurality of stator plates, where the stator plates are mounted on the inner surface of a casing. The rotor plate is adapted to rotate inside the casing, creating a gap between the rotor plates and the stator plates where the rotor creates a shearing force in the liquid when rotated. The drawback to such a treatment device is that due to the fact that the stator plates are positioned above and below the stator plates in an axial direction, the liquid must pass downstream past a rotor plate. This means that the rotating rotor plate creates a centrifugal force, which means that the liquid must overcome the centrifugal forces in order to be capable of travelling downstream in the device. Furthermore, such a system would require pre-filtering, as any small particles, such as sand or debris, would be collected between the stator plates abutting the casing, as stream of liquid being treated would not be capable of clearing the sand or debris.

JP 2007 044567 discloses a ship ballast water treatment device, which is adapted to kill microorganisms in ballast water by atomizing them by a shearing action of a highs-speed water flow and impact given by a high speed rotator.

Thus, there is a need to provide a liquid treatment system that is inexpensive, simple, has reduced energy consumption and can easily be retrofitted.

GENERAL DESCRIPTION

In accordance with the invention there is provided a liquid treatment apparatus for treatment of liquid contaminated with living organisms according to claim 1. The liquid treatment apparatus comprises a liquid treatment device, which comprises itself a rotating means having a first surface for receiving the liquid to be treated and a rotational axis that is substantially perpendicular to the first surface, where the first surface is provided with engaging means for engaging the liquid and to provide acceleration to the liquid upon rotation of the rotating means, stationary means which is arranged to form an inner boundary in order to constrict the liquid on the first surface of the rotating means, where the rotating means rotate relative to the stationary means and the stationary means is arranged to define an uninterrupted annular slit between the first surface of the rotating means and a first end of the stationary means allowing the liquid to pass in a radial direction away from the rotational axis between the rotating means and the stationary means and out of the liquid treatment device, and where the engaging means are at least provided on a surface area of the rotating means that defines the slit, ensuring that upon passing through the slit in a radial direction the liquid has passed a surface area of the rotating means that is provided with engaging means.

The rotating means may be rotated at a relatively high speed, or anywhere up to about 4000 rpm, in order to provide acceleration to the liquid, when the liquid comes in contact with the first surface of the rotating means. Thus, the liquid is instantaneously accelerated in the direction of the rotational movement of the rotating means when the liquid comes in contact with the rotating means and especially when the liquid comes in contact with the engaging means. Furthermore, the instantaneous acceleration provides a centrifugal force on the liquid particles being accelerated and especially on particles within the liquid, such as organisms and/or microorganisms. Thus, the centrifugal force being applied to the particles of the liquid and/or particles within the liquid may cause a rapid acceleration that can destroy the particles by crushing the outer shell and/or rupturing the cell membrane for exoskeleton-bearing aquatic invertebrates and single and/or multiple cell organisms respectively.

Furthermore, by arranging the slit to be the ultimate part of the liquid treatment device in where the liquid passes out from the liquid treatment device, it is ensured that any debris, sand or particles that may be present in the liquid to be treated, will not get trapped inside the liquid treatment device, but it is ensured that as soon as the particles have a size that is smaller than the smallest part of the slit, the liquid is capable of functioning as a transport vessel (the particles are mixed with the liquid) to transport the particles out from the inner volume of the liquid treatment device. Any particles that are present in the liquid will therefore be forced, due to the centrifugal forces, in a radial direction along the surface of the rotating means in a direction towards the slit, and upon passing the slit the liquid that carries the particles may be collected to be transported away from the liquid treatment device.

Within the meaning of the present invention, the term "rotational movement" means a movement that is effectuated by the rotation of the rotating means. The application of force to a particle is applied in a direction that is tangential to the radial axis of the rotating means, where the radial axis may be seen as the radius of the rotational axis of the rotating means.

An example of a calculation of the centrifugal force for a particle may be expressed in the following formula:

$$ F_c = m_p \cdot r \cdot (2\pi \cdot n)^2 $$

where the elements are,

- $F_c$ = the centrifugal force (N),
- $m_p$ = the mass of the particle (Kg),
- $r$ = the distance from the rotational centre (m), and
- $n$ = revolutions per second ($s^{-1}$).

Thus, for example for a particle with a mass of 1 gram (0,001 kg) and at 2400 Rpm (40 $s^{-1}$) accelerated at a distance of 35 cm from the rotational centre, the centrifugal force of the particle is about 22,1 N, which is a relatively high force applied to a small/light particle. The force may be seen as enough to damage or destroy the particle, as an organism would probably not withstand such a centrifugal force and the organism would probably be neutralised.

Furthermore, when a particle comes in contact with the engaging means, the particle may be accelerated from standstill to full rotational force almost instantaneously. In the above example, if a particle comes into contact with the engaging means of the rotating means and is accelerated from standstill to full velocity (40 revolutions per second), in a direction that is tangential to the radius of the rotating means, and the particle will have a massive amount of force given by the engaging means in order to accelerate the particle. The force may be seen as:

$$F_b = m_p \cdot a_b = m_p \cdot \frac{v}{t}$$

where the elements are,

- $F_b$ = the tangential/acceleration force (N),
- $m_p$ = the mass of the particle (Kg),
- $\alpha_b$ = acceleration in the tangential direction (m/s²), and
- $v$ = velocity (m/s)
- $t$ = acceleration time (s).

Assuming that the acceleration is almost instantaneous, it is safe to assume that the particle can be accelerated in approximately 1ms (millisecond) and having a 1 gram particle hitting an engagement means moving at 40 revolutions pr. second at a distance from 35 cm from the centre, the velocity of the particle will be approximately 88 m/s. (v=r * 2π *n). Thus, the force the particle is effected by is:

$$F_b = m_p \cdot \frac{v}{t} \Rightarrow 0.001 \cdot \frac{88}{0,001} = 88 \, N$$

i.e. the force allowing the particle to be instantaneously accelerated is approximately 88 N.

The sheer amount of centrifugal and acceleration force may be enough to treat the liquid, but the device enables the liquid to be treated with at least one different treatment. The engagement means that are arranged on the first surface of the rotation means may be arranged to travel through the liquid at such a high speed that the engagement means create cavitation gas bubbles in the low pressure area that trails the engagement means in the direction of rotation of the rotating means. The cavitation bubble may expand in the low pressure volume on the first surface area of the rotating means trailing the engagement means or on the back side of the engagement means and when the bubble has expanded to a degree, where the surface tension of the liquid is exceeded, the bubble breaks and implodes. The implosion results in a rapid increase in pressure within the volume of the bubble, and the collapse generates an increase in the temperature of the gas, where the gas dissipates into the surrounding liquid via a mechanism, which releases a significant amount of energy. At the point of total collapse, the temperature of the gas may be up to several thousand kelvin and the pressure several hundred atmospheres. This form of cavitation energy is quite powerful and may cause damage, such as may be seen in e.g. boat propellers or pumps.

However, in the present invention, the cavitation energy may be focussed by arranging the engagement means to act on the liquid in the volume of the slit between the first surface of the rotating means and the stationary means, so that all the liquid that passes the rotational means has to go through the slit. The engagement means causes the cavitation within the slit, so that any organism that is within the slit is affected by the cavitation energy caused by the collapsing cavitation gas bubbles and the energy, in the form of an acoustic wave and/or increased temperature, may neutralise the organism and thereby treat the liquid.

Due to the fact that the cavitation gas bubbles may be seen as erosive to the surface of the rotational means, the rotational means may be made out of a material that can substantially withstand the erosive forces, such as tungsten carbide steel, ceramics, metal alloys, etc. However, the rotating means may be made out of a relatively cheap material, such as steel or aluminium, so that the rotating means may be replaced when the erosion has weakened the structural integrity of the rotating means. Thus, the rotating means may be provided in such a way that the rotating means has a limited lifetime of operation and may be exchanged when the usage time has exceeded the predefined limit of the rotating means.

In order to minimize the risk of not neutralizing the organisms in the liquid to be treated by the centrifugal force and/or the cavitation energy, the size and/or volume of the slit may be varied, so that the cavitation energy is concentrated within the slit. This may be achieved by optimizing the distance between the first surface of the rotating means and the first end of the stationary means, i.e. the height of the slit. The closer the stationary means is to the first surface of the rotating means, the closer the particles of the water or in the water have to be relative to the first surface or the engagement means on the first surface. Thus, the height of the slit may limit the maximum distance a particle in the liquid can be from the engagement means.

The volume of the slit may further be adjusted by increasing or decreasing the radial width of the first end of stationary means, so that the liquid and/or the particles within the liquid have to manoeuver a predefined distance within the slit. A larger radial width of the slit means that the liquid or particles have to travel an increased distance within the slit and the probability that the cavitation energy will affect the liquid or particle is increased.

When the rotating means is not in rotation motion, i.e. is stationary, the presence of the slit results in that the liquid may sieve through the slit. However, this sieve may be prevented by arranging a closing means to cover the slit, so that the liquid does not escape through the slit.

However, when the rotating means in in rotational movement, especially during high velocity rotational movement, i.e. anywhere between 600 and 5000 rpm, the engagement means and the first surface of the rotating means provide a centrifugal acceleration to the liquid, so that the liquid is slung at high speeds from the rotating means and through the slit. This centrifugal acceleration increases the throughput of liquids through the slit significantly, so that a relatively small slit may have a large throughput of liquids during operation of the rotating means.

The stationary means may be adapted to define the inner radial boundary of the liquid treatment device, ensuring that any liquid that enters within the inner radial boundary, i.e. the inner volume of the liquid treatment device, may only be capable of exiting the inner volume via the slit. When the liquid passes the slit, the liquid is may be seen as treated, and will not be exposed to further treatment by the liquid treatment device. The exception to this may be if the liquid is circulated back into the inner volume of the liquid treatment device, by reintroducing the liquid onto the surface of the rotating means. Furthermore, the treated liquid may in some cases be introduced into a second liquid treatment device that may be in serial liquid communication with the first liquid treatment device, so that the treated liquid exiting the first liquid treatment device may be exposed to a second treatment by a second liquid treatment device.

The liquid treatment system is primarily advantageous to reduce the amount of living organism in a body of liquid, where a filtration device may be introduced afterwards to filter out any remaining particles of neutralised organisms.

In one embodiment of the invention the stationary means is in the form of a cylindrical vessel having an uninterrupted side wall (i.e. having no through-going openings in the side wall), having a first end and a second end, where the liquid to be treated may be introduced into the vessel via the second end and the liquid exits the vessel via the first end. The uninterrupted side wall may define the inner boundary of the liquid treatment device, where the inner volume of the stationary means may be defined as the area within the side walls of the stationary means and between the first and the second end in height. The rotating means may be positioned in such a way that the rotating means are outside the inner volume of the stationary means, so that the rotating means do not intersect and/or cross the inner volume of the stationary means. The rotating means may be positioned distal to the first end of the stationary means, so that the space between the first end and the rotating means defines the slit of the device.

The cylindrical vessel may be provided with a cavity that allows fluid communication from the second end of the stationary means to the first end of the stationary means, so that the liquid that enters into the stationary means is capable of flowing through the stationary means in an axial direction (between the first end and the second end) so that the liquid may contact the rotating means that is situated close to the first end of the stationary means.

In one embodiment of the invention, the liquid may be water or more specifically where the liquid may be ballast water. This means that the treatment device may be especially suited to treat water or even more so ballast water. The treatment device may be adapted to reduce the number of organisms in water or ballast water in order to reduce the risk that ballast water collected in one water eco system introduces foreign/alien organisms in a different eco system. For treatment of ballast water, the treatment device may be fitted or retrofitted to a ship's ballast system, where the treatment device may be used to treat ballast water before the ballast water is introduced into the ballast tank or where the treatment device may be used to treat ballast water subsequent to the exit of the ballast water from the ballast tank, but before it is introduced into the surrounding body of water.

According to the invention the rotating means is a substantially circular disk having a centre area and a peripheral edge defining the first surface. This means that the first surface of the rotating means is an area having a size that is defined by the radius that extends from the centre of the disk to the peripheral edge. The radius of the circular disk may be parallel to a radial axis of the disk. The substantial centre of the disk may define the rotational axis of the circular disk, so that when the disk is rotated, the peripheral edge of the disk is substantially at the same distance from the rotational axis at all angles of rotation.

In one embodiment of the invention the circular disk may have an uninterrupted structure, ensuring that the liquid to be treated must come in contact with the surface area of the circular disk, and ensuring that the majority of the liquid leaves the surface area of the circular disk in a radial direction, passing the radial boundary of the peripheral edge. This effectively means that there are no through-going openings in the circular disk, which means that any liquid that comes into contact with the first surface of the circular disk is manoeuvred in a radial direction towards and past the peripheral edge, and is prevented in passing the circular disk in an axial direction, while the liquid is within the surface area of the circular disk.

In one embodiment of the invention the engaging means may be provided substantially at the periphery of the circular disk. By arranging the engaging means at the periphery of the circular disk, the same engaging means are located at a substantially maximal distance from the centre of the disk. This means that during rotation of the disk, the engaging means arranged at the periphery of the disk will have the highest velocity, i.e. travel the greatest distance over a certain amount of time, while the angular speed is the same across the entire radial axis of the disk. Thus, the engagement means arranged close to the periphery of the disk provides the greatest centrifugal force ($F_c$) and/or acceleration force ($F_b$) to a liquid or a particle within a liquid when accelerated into rotational movement by the disk.

In one embodiment of the invention the engaging means may be provided at a distance that is between 70% and 100% of the total distance from the centre to the peripheral edge of the first surface, or more specifically between 80% and 100% of the total distance, or more specifically between 90% and 100% of the total distance or more specifically between 95% and 100% of the total distance and where the remaining central part of the total distance is void of engaging means.. This means that if the total distance from the centre to the peripheral edge is about 10 cm, then a distance that is between 70% and 100% of the total distance means that the area in question is between about 7 and 10 cm from the centre of the first surface. Furthermore, this means that the engaging means may be arranged at the peripheral edge and stretching inwards toward the centre of the disk, while the area around the centre of the first surface does not have engaging means. Thus, by having an area of the first surface that is void of engagement means, it is possible to fabricate and construct cheaper rotational means, as the void surface does not need surface treatment or an external application of engagement means, such as the addition of grains and/or depressions.

In one embodiment of the invention the rotating means may further comprise a motor for rotating the rotating means around its rotational axis. This means that the rotation of the rotating means may be controlled in a precise and consistent manner independent of the flow of liquid to the first surface of the rotating means. In one advantageous embodiment, the motor may be adaptable so that it may maintain a constant angular speed during the use of the liquid treatment device. Thus, even though the liquid contains a vast amount of organisms, large and small, the motor is capable of maintaining the predefined angular speed (RPM) in order to maintain an effective acceleration of particles and/or to maintain a controlled formation of cavitation gas bubbles.

According to the invention the stationary means is in the form of an annular collar that is suspended at a predefined distance above the first surface of the rotating means. The annular collar thus provides a stationary means that may restrain the liquid on the first surface of the rotating means. The slit may be formed in the volume that separates the rotating means and a first end of the annular collar, so that any movement of the annular collar in the direction towards the rotating means or away from the rotating means changes the height of the slit and thus the volume of the area between the annular collar and the rotating means.

In one embodiment of the invention, the stationary means may be provided with at least one protrusion that extends from an inner radial periphery of the stationary means and in an inward radial direction. This protrusion may be used to prevent the liquid in the liquid treatment device from gathering a momentous rotational velocity as the protrusion hinders the liquid from traveling unhindered along the inner radial periphery of the stationary means. Thus, when the liquid that is close to the inner periphery of the stationary means comes into contact with the rotating means the acceleration of the liquid and/or the particles within the liquid will be instantaneous from a low velocity to a high velocity and not an incremental increase in acceleration.

According to the invention, the slit is an uninterrupted annular slit. Thus, the slit is a circular slit that extends 360 degrees, so that the liquid that interacts with the rotating means and/or the engaging means may be slung out from the rotating means in all radial directions relative to the rotating axis of the rotating means. This may ensure that the throughput of the liquid treatment device is sufficient in order to fulfil the requirements for throughput of a ballast water system. Thus, the larger radius the slit has, the larger amount of water the device may treat, as an increased radius/diameter of the annular slit, the larger the circumference of the area at which the liquid can exit the liquid treatment device.

In one embodiment of the invention the at least one slit may define a predefined cross sectional distance, which may be the distance between the engagement means on the first surface of the rotating means and the first end of the stationary means. The predefined cross sectional diameter may be adjusted in order to adjust the disintegration tolerances of the liquid treatment device, i.e. by increasing the cross sectional diameter, the tolerance for particle size may be increased, as the smaller particles may escape from the liquid treatment device without being damaged due to contact with the engagement means. However, by reducing the predefined cross sectional diameter, the likelihood that the smaller particles are damaged by the engagement means is greater. The predefined cross sectional diameter may be anywhere between 0,01 mm and up to 1mm, or more specifically between 0,05 mm and 0,5 mm, or more specifically between 0,08 mm and 0,2 mm or more specifically as in one exemplary embodiment at 0,1 mm.

In one embodiment of the invention the engagement means may be in the form of at least one protrusion. This means that the engagement means may be arranged to protrude from the first surface area of the rotating member in order to provide an acceptable engagement to the liquid. Thus, during rotation of the rotating means in a body of liquid, the protruding engagement means engages the liquid at the leading surface of the protrusion, creating a higher pressure area substantially at the leading surface. The leading surface may engage the liquid and/or particles within the liquid so that the velocity of the rotating means and the engagement means comes in contact with the particle to damage, disintegrate and/or neutralise the particle, as may be the case when the particle is an organism.

During rotation of the rotating means, the trailing surface area of the protruding engagement means creates a low pressure volume relative to the leading edge, so that a cavitation gas bubble may be created at the trailing edge. Thus, when the cavitation bubble implodes, the energy of the implosion is distributed to the surrounding volume and may neutralise any organism in a similar way as the cavitation bubble a pistol shrimp *(Alpheus bellulus*) uses to neutralise organisms.

In one embodiment of the invention the protrusion may be in the form of at least one wolfram and/or tungsten carbide grain. This means that the protrusion may be made of a very strong durable material in order to minimize wear and tear on the protrusions due to high velocity interaction with particles in the liquid. Furthermore, the wolfram and/or tungsten carbide grains are highly resistive to high heat and can therefore tolerate energy bursts that occur due to the cavitation gas bubbles implosion trailing the protrusions. Thus, the surface of the carbide grains will have a high tolerance to erosion caused by the energy released in the implosion.

In one embodiment of the invention the engagement means may be in the form of a plurality of protrusions. In order to ensure that the rotating means provide a large area on the first surface that is capable of treating the liquid, the surface area of the rotating means may be provided with a plurality of protrusions. This means that the likelihood that the liquid and/or a particle within the liquid are engaged by the protrusion is increased, so that a larger surface area of the rotating means is capable of treating the liquid. The amount of protrusions may be measured using the FEPA (Federation of European Producers of Abrasives) standard or a comparative CAMI (Coated Abrasive Manufacturers Institute) standard, which defines the particle size and the amount of particles pr. square unit. For the specific purpose of the present invention, the particle sizes and the amounts of particles pr. square unit may be adjusted in order to obtain an optimum abrasiveness by choosing particle sizes and amount that are between the standard defined units of FEPA or CAMI, i.e. where the sizes are in between the defined standard sizes.

The amount of protrusions may be in the range of P6 - P80, or more specifically between P12 - P30, more specifically between P16 - P24, or especially between P18 - P20. The optimum amount of protrusions may be chosen in accordance with the size of the slit, where the size of the slit, i.e. the height or volume, may be chosen in accordance with the chosen amount of protrusions for the rotating means.

In accordance with the invention, the liquid treatment apparatus is provided comprising an inlet conduit for intake of a viscous liquid, a reservoir for receiving the viscous liquid, an outlet conduit for discharging treated liquid, wherein the reservoir is provided with a liquid treatment device according to the invention. Thus, the liquid treatment device may be arranged within an apparatus that allows the liquid treatment device to be connected to a pump system, where the liquid is pumped into the inlet and into the reservoir where the reservoir is provided with a liquid treatment device according to the invention. Subsequent to the treatment of liquid, the liquid is discharged through the outlet conduit and back into the pump system. The pump system may in a preferred embodiment be a ballast water pump system, and where the liquid treatment apparatus is arranged as a part of the ballast water pump system, either when the ballast water is taken into the ballast tanks or before the ballast water is discharged from the ballast tanks.

Further, a method of treating an untreated liquid contaminated with living organisms is provided, using the liquid treatment apparatus of the invention, as defined in claim 8.

According to the invention there is further provided a use of a liquid treatment apparatus, according to the invention, for treating ballast water.

In one embodiment of the invention, the liquid treatment apparatus may be used as a liquid filtering apparatus, respectively. This means that the liquid treatment apparatus may be used as a filter, or instead of a filter in an existing ballast water treatment apparatus that may be arranged on a floating vessel. Filters, such as those used in ballast water pump systems, are often high capacity filters that are capable of filtering a large amount of ballast water in a short amount of time, in order to allow ballast water to be pumped into or out of ballast tanks. The filter systems are often systems that prevent particles or organisms of a certain size to enter into the ballast water pumping system, and especially into the ballast water treatment device.

However, a significant problem with filters is that the filter systems need to be cleaned and maintained, which is often a significant drawback to existing filter systems, as the cost of maintaining the filter systems may be significant. By placing the liquid treatment device of the present invention in the flow path of an existing ballast water treatment system, it is possible to pre-treat the ballast water to reduce the amount of living organisms in the liquid before a secondary or a redundancy treatment device finishes the treatment of the liquid to remove living organisms or living micro-organisms from the liquid. Thus, the liquid treatment apparatus of the present invention may be used as a pre-treatment for a UV-light, chemical or other types of ballast water treatment devices. This means that the maintenance of the system would be minimal, compared to systems having conventional filters, as the liquid treatment device of the present invention does not require maintenance in the form of cleaning and removing any filtered particles. Thus, the present invention also relates to the use of a liquid treatment device prior to subsequent treatment in a ballast water treatment device and/or as system.

BRIEF DESCRIPTION OF DRAWINGS

The invention is explained in detail below with reference to the drawings, in which

Fig. 1 is a sectional view of a liquid treatment device, which may be part of a liquid treatment apparatus according to the invention,

Fig. 2 is a sectional view of an engagement means on the first surface of the rotating means,

Fig. 3 is a sectional view of a liquid treatment apparatus in accordance with the invention,

Fig. 4 is a sectional view of the same, where the stationary means and the outlet has been separated from the rotating means, and

Fig. 5 is a top view of a liquid treatment device, which may be part of a liquid treatment apparatus according to the invention.

DETAILED DESCRIPTION OF DRAWINGS

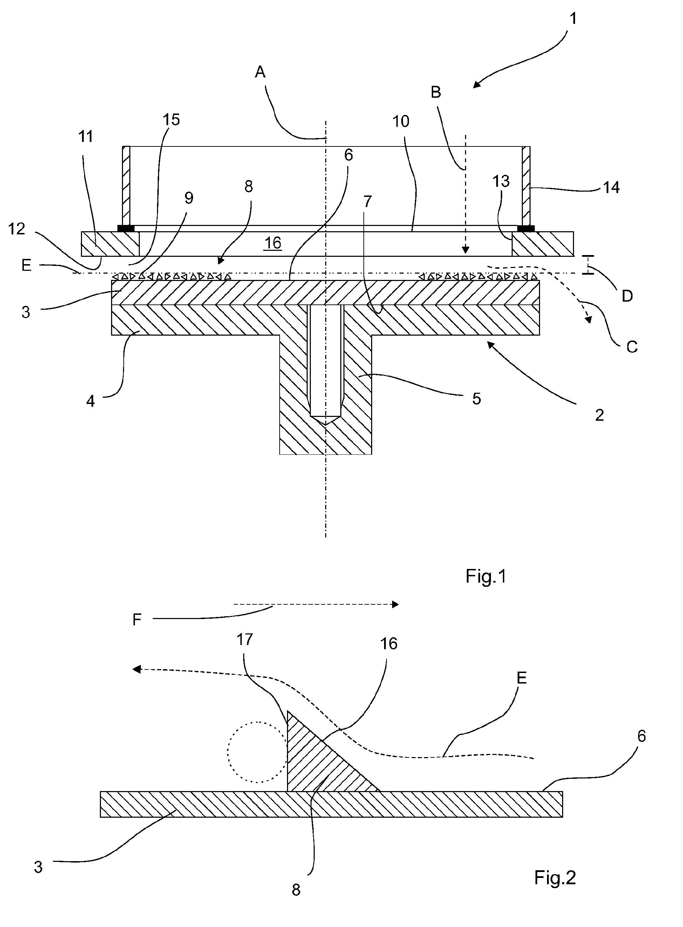

Fig. 1 is a cross sectional view of a liquid treatment device 1, which may be part of a liquid treatment apparatus in accordance with the invention, where the device 1 comprises a rotating means 2 and a stationary means 10. The rotating means 2 has a rotational axis A in a centre area of the rotating means 2, where the rotating means 2 is rotated along with the rotational axis.

The rotating means 2 comprises a first rotating member 3 having a first surface 6 and a second opposite surface 7, where the first surface is adapted to receive liquid to be treated and where the second surface 7 is adapted to be attached to a second rotating member 4. The second rotating member provides a basis for the first rotating member 3 and may further provide a coupling means 5, which may be an axle that may be coupled to a motor that can rotate the second rotating member 4 and consequently the first rotating member 3.

The first surface 6 of the first rotating member 3 is provided with engagement means 8, which are capable of engaging the liquid to be treated and/or particles within the liquid. The engagement means 8 are in this embodiment in the form of a plurality of protrusions that have a top end 9, which defines first plane E, which stretches across the first surface 6 of the first rotating member 3, and may be parallel to the first surface 6.

The stationary means 10 is in this embodiment in the form of an annular collar 11 that has a first surface 12 that faces the first surface 6 of the rotating means 2, and a second surface area 13, which is the inner periphery of the collar, which allows liquid to pass the centre area of the collar 11 and towards the first surface 6 of the rotating means 2 in a direction that is shown with arrow B. The second surface area 13 of the collar 11 can therefore retain any liquids in a central area 16 that engage the first surface 6 of the rotating means and in this embodiment the collar is further provided with a further retaining wall 14, which extends volume for retaining liquids by the stationary means 10.

By placing the stationary means 10 in the manner as shown in Fig. 1, the first surface 12 of the stationary means 10 and the first surface of the rotating means defines a slit 15, i.e. a volume that is located between the first surface 6 of the rotating means 2 and the first surface 12 of the stationary means. The slit 15 is adapted to allow liquid that has been fed into the liquid treatment device 1 in the direction of arrow B to escape the central area 16 of the stationary means 10 via the slit in the direction shown by the arrow D. When the rotating means 2 is not in rotation, the liquids, if any is present, can sieve slowly through the slit, while, when the rotating means 2 in in full rotation, the rotational forces applied to the liquid through the first surface 6 or the engagement means 8 of the rotating means 2 will increase the velocity of the liquid considerably and force the liquid under increased pressure through the slit 15.

The distance between the first plane D and the first surface 12 of the stationary means may be adjusted in order to alter the size (volume) of the slit 15 in order to increase or decrease flow, and to ensure that the liquid and/or particles in the liquid will come into contact with the engagement means 8 of the rotating means in order to treat the liquid.

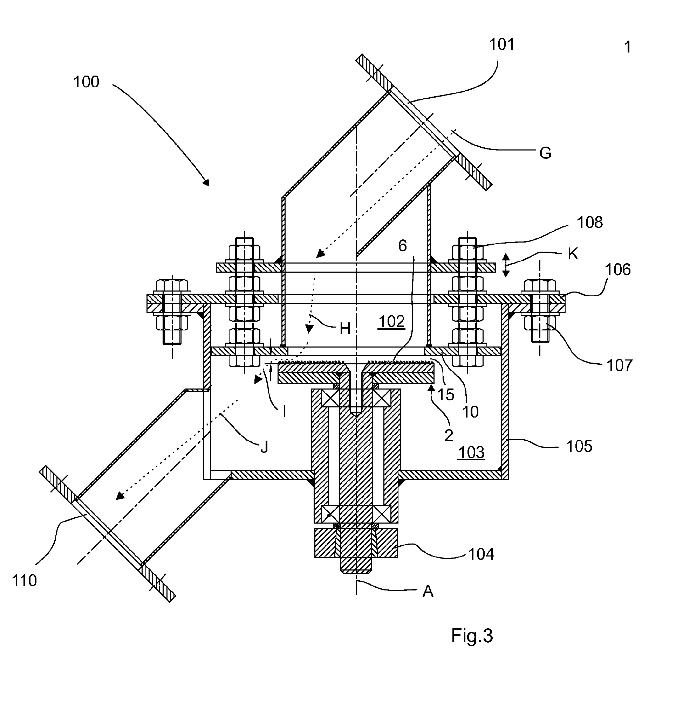

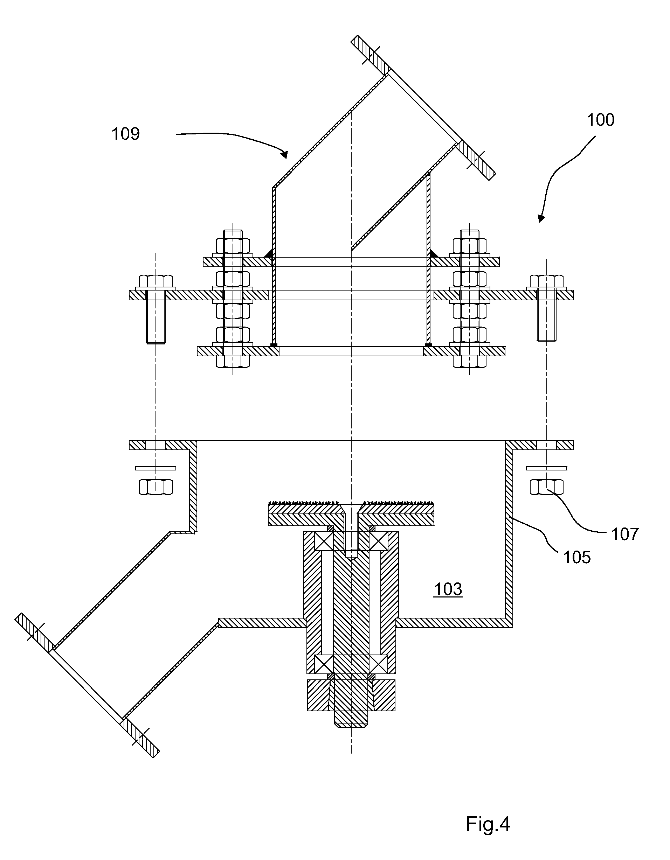

In this exemplary embodiment of the present invention, the thickness of the stationary means 10 may be approximately between 6 and 10 mm and made of a hardox 400 or hardox 600 material made by SSAB, SE-613 80 Oxelösund, Sweden. The thickenss of the first rotating member 3 is approximately less than 1 mm, where the protrusions may be in the form of wolfram carbide grains that are soldered using copperpaste on the surface of the first rotating member 3. The diameter of the rotating member 2 may be approximately 500 mm or at a radius of 250 mm, where the first 1/3 of the radius from the center is not provided with carbide grains, while the remaining 2/3 up to the periphery of the rotating means are provided with carbide grains. The second rotating member may have a thickness of approximately 20 mm for stability and enough strength to manage the throughput of liquids. The preferred angular speed is approximately 3600 RPM, and such a system may have a throughput of anywhere bewenn 50 - 100 M$^3$/h. A motor to drive the rotating means, as shown in Fig. 3 and 4, may be an electrical motor that is anywhere between 15 and 30 KW.

Fig. 2 shows a sectional view of one engagement means 8, which is arranged on the first surface 6 of a first rotational member 3 of the rotating means. During rotation of the rotating means in the direction shown by arrow F, the liquid will travel in the direction as shown by arrow E. This movement of the rotating means results in that the liquid is engaged by the engagement means 8 at the leading surface 16 of the engaging means 8. Thus, the velocity of the engagement means, relative to the liquid, ensures that any particles within the liquid that come into contact with the leading surface 16 are administered with forces that may neutralise or damage the particles. Furthermore, on the leading surface 16 of the engagement means, the velocity of the engagement means 8 results in a high pressure area, where the leading surface 16 engages the liquid. Thus, the increase in pressure on the leading surface 16 means that the trailing surface 17 of the engagement means 8 is an area of lower pressure, which under high velocity creates a cavitation gas bubble 19, which increases in size until the surface tension of the bubble exceeds its limit and the burst of the bubble creates a jet of high pressure, which releases a large amount of heat and an acoustic wave. Thus, upon the burst of the cavitation gas bubble, the energy released will disperse into the surround liquid and will neutralize any organisms that are in the immediate vicinity.

In order to ensure that organisms are in the immediate vicinity of the engagement means, the slit 15 of Fig. 1 may be made as small as possible in order to limit the distance at which the liquid can be away from the top 9 of the engagement means in order to ensure that most of the liquid, if not all of the liquid that passes the engagement means 8, is in the vicinity of the cavitation bubble. This means that the liquid is therefore treated with the energy of the implosion of the cavitation gas bubble and the organisms of the bubble are neutralised.

Fig. 3 shows a sectional view of a liquid treatment apparatus 100 in accordance with the invention, where the liquid treatment apparatus is provided with an inlet conduit 101, which allows the liquid to enter the liquid treatment reservoir 102 of the apparatus 100 in the direction shown by arrow G. Within the reservoir, gravity forces the liquid to engage the first surface 6 of the rotating means 2 in the direction of arrow H. Upon rotation of the rotating means 2, the liquid is forced into the slit between the first surface 6 of the rotating means and the stationary means 10 in the direction of the arrow I, where the liquid is released in to an outlet chamber 103 and from there released through an outlet conduit 110 in the direction of arrow J.

The rotating means is rotated by the use of a motor 104 that rotates the rotating means along the rotational axis A in order for the rotating means to engage the liquid and force the liquid into the outlet chamber 103. The motor and the rotating means are coupled to the walls 105 of the outlet chamber 103, so that the rotating means rotates relative to the walls 105 of the outlet chamber 103.

The stationary means 10 is coupled to the outer wall 105 of the outlet chamber using a fastening member 106 that is fastened to the wall 105 using fastening means 107. The stationary means 10 may be manoeuvred in a direction show by arrows K, relative to the rotating means 2 using adjustment means 108 that allow the stationary means to be adjusted to increase or decrease the size of the slit 15. Thus, by adjusting engaging the adjustment means, the distance of the stationary means from the rotating means may be adjusted.

Fig. 4 shows the same liquid treatment apparatus of Fig. 3, where the fastening members 107 have been released, allowing the inlet section 109 to be removed from the walls 105 of the outlet chamber 103 in order to provide access to the rotating means. Thus, by releasing the inlet section 109 from the outlet chamber 103, a technician may e.g. replace the first rotating section (Fig. 1) if the engagement means have been eroded or are worn. Thus, it is possible to provide a maintenance access into the outlet chamber 103 by removing the inlet section 109 from the outlet chamber 103.

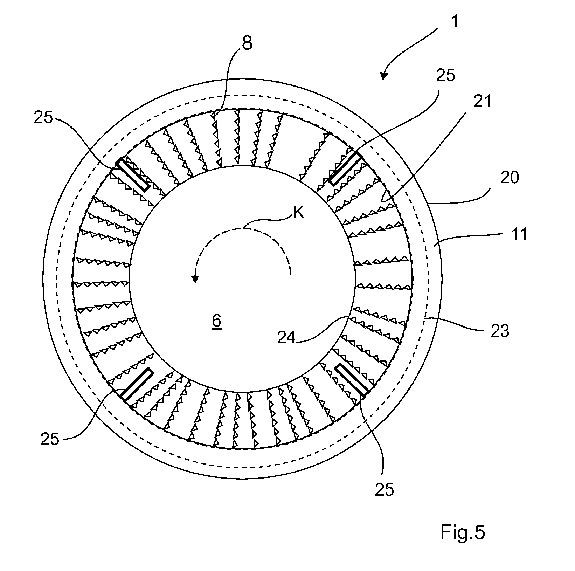

Fig. 5 shows a top view of a liquid treatment device 1, as shown in Fig. 1, where the stationary means 11 is seen having an outer radial periphery 20 and an inner radial periphery 21, which is arranged above the rotating means 6. The rotating means is provided with engaging means 8 in an area that is between the centre of the rotating means 6 defining an inner boundary 24 of the engaging means 8 and the outer radial periphery 23 of the rotating means 6. The rotating means may be rotated along the direction shown by arrow K, which means that any liquids that are in direct or indirect contact with the rotating means will be accelerated radially outwards towards the inner radial periphery 21 of the stationary means. Thus, in order to prevent the liquid from gaining momentum in rotating along the inner radial periphery 23 of the stationary means, the inner radial periphery 23 may be provided with one or more protrusions that extend from the inner radial periphery 23 and in a direction towards the radial centre of the annular stationary means 11 or the rotating means. The protrusions 25 prevents the liquid from moving more than a fraction of a full revolution without it being hindered by one of the protrusions 24 to come to a full stop or at least having a reduced velocity. Thus, the liquid and its content will not be incrementally accelerated by the rotating means, but will be instantaneously accelerated when it comes into contact with the engaging means.

## Claims

1. A liquid treatment apparatus (100) for treatment of liquid contaminated with living organisms comprising:

     - a liquid treatment reservoir (102),
     - an inlet conduit (101) to allow the liquid to be treated to enter said reservoir (102),
     - a liquid treatment device (1) with which said reservoir (102) is provided, and
     - an outlet conduit (110) for discharging treated liquid;
     - wherein said liquid treatment device (1) comprises:
     - a rotating means (2) having a first surface (6) for receiving the liquid to be treated and a rotational axis (A) that is substantially perpendicular to the first surface (6), where the first surface (6) is provided with engaging means (8) for engaging the liquid and to provide acceleration to the liquid upon rotation of the rotating means (2), and where the rotating means (2) is a substantially circular disk (3) having a centre area and a peripheral edge defining the first surface (6),
- a stationary means (10) which is arranged to form an inner boundary (13) in order to constrict the liquid on the first surface (6) of the rotating means (2), where the rotating means (2) rotate relative to the stationary means (10), where the stationary means (10) comprises an annular collar (11) that is suspended at a predefined distance above the first surface (6) of the rotating means (2), and the stationary means (10) is arranged to define an uninterrupted annular slit (15) between the first surface (6) of the rotating means (2) and a first end (12) of the stationary means (10) allowing the liquid to pass in a radial direction away from the rotational axis (A) between the rotating means (2) and the stationary means (10) and out of the liquid treatment device (1);
- where said rotating means (2) is positioned outside an inner volume of said stationary means (10);
- where the engaging means (8) are at least provided on a surface area of the rotating means (2) that defines the slit (15), ensuring that upon passing through the slit (15) in a radial direction the liquid has passed a surface area of the rotating means (2) that is provided with the engaging means (8)
- and where, within the reservoir (102), gravity forces the liquid to engage the first surface (6) of the rotating means (2).

2. A liquid treatment apparatus (100) according to claim 1, where the liquid is water or more specifically where the liquid is ballast water.

3. A liquid treatment apparatus (100) according to anyone of claims 1 or 2, wherein the engaging means (8) are provided at the periphery of the circular disk (3).

4. A liquid treatment apparatus (100) according to claim 3, wherein the engaging means (8) are provided at a distance that is between 70% and 100% of the total distance from the centre to the peripheral edge of the first surface (6), or more specifically between 80% and 100% of the total distance, or more specifically between 90% and 100% of the total distance or more specifically between 95% and 100% of the total distance, and where the remaining central part of the total distance is void of engaging means (8).

5. A liquid treatment apparatus (100) according to any of the preceding claims, wherein the engaging means (8) comprises at least one protrusion.

6. A liquid treatment apparatus (100) according to claim 5, where the protrusion is in the form of at least one wolfram and/or tungsten carbide grain.

7. A liquid treatment apparatus (100) according to anyone of claim 5 or 6, wherein the engaging means (8) is in the form of a plurality of protrusions.

8. A method of treating a liquid comprising the steps of:

- providing an amount of an untreated liquid contaminated with living organisms;
- providing a liquid treatment apparatus (100) according to anyone of claims 1 to 7;
- introducing the untreated liquid through the inlet conduit (101) of the liquid treatment apparatus (100) into its reservoir (102);
- within the reservoir (102), letting gravity forcing the liquid to engage the first surface (6) of the rotating means (2), where the engaging means (8) provide rotational acceleration of the liquid upon rotation of the rotating means (2);
- providing a treatment of the liquid by forcing the untreated liquid to pass through the slit (15), the liquid passing in a radial direction away from the rotational axis (A) between the rotating means (2) and the stationary means (10) and out of the liquid treatment device (1);
- discharging the treated liquid through an outlet conduit (110).

9. Use of a liquid treatment apparatus (100) according to claims 1 - 7 for treating ballast water.

**Patentansprüche**

1. Flüssigkeits-Behandlungs-Einrichtung (100) zur Behandlung von mit lebenden Organismen kontaminierter Flüssigkeit, umfassend:

- ein Flüssigkeits-Behandlungs-Reservoir (102),
- eine Einlass-Leitung (101), um der Flüssigkeit zu erlauben, beim Eintritt in das Reservoir (102) behandelt zu werden,
- eine Flüssigkeits-Behandlungs-Vorrichtung (1), mit welcher das Reservoir (102) versehen ist, und
- eine Auslass-Leitung (110) zur Ausgabe behandelter Flüssigkeit;
- wobei die Flüssigkeits-Behandlungs-Vorrichtung (1) umfasst:

    - ein rotierendes Mittel (2) mit einer ersten Oberfläche (6) zum Aufnehmen der zu behandelnden Flüssigkeit und einer Rotationsachse (A), die im Wesentlichen senkrecht zu der ersten Oberfläche (6) ist, wobei die erste Oberfläche (6) mit Eingriffmitteln (8) zum Eingriff mit der Flüssigkeit versehen ist und um Beschleunigung für die Flüssigkeit beim Drehen des rotierenden Mittels (2) bereitzustellen, und wobei das rotierende Mittel (2) eine im Wesentlichen kreisförmige Scheibe (3) mit einer Mittelfläche und einer Außenkante, die die erste Oberfläche (6) definiert, ist,

- ein stationäres Mittel (10), welches angeordnet ist, um eine Innengrenze (13) zu bilden, um die Flüssigkeit auf die erste Oberfläche (6) des rotierenden Mittels (2) zu beschränken, wobei das rotierende Mittel (2) sich relativ zu dem stationären Mittel (10) dreht, wobei das stationäre Mittel (10) einen ringförmigen Kranz (11) umfasst, der sich bei einem vordefinierten Abstand über der ersten Oberfläche (6) des rotierenden Mittels (2) befindet, und das stationäre Mittel (10) angeordnet ist, um einen ununterbrochenen ringförmigen Schlitz (15) zwischen der ersten Oberfläche (6) des rotierenden Mittels (2) und einem ersten Ende (12) des stationären Mittels (10) zu definieren, was der Flüssigkeit erlaubt, in einer radialen Richtung weg von der Rotationsachse (A) zwischen dem rotierenden Mittel (2) und dem stationären Mittel (10) und heraus aus der Flüssigkeits-Behandlungs-Vorrichtung (1) zu gelangen;

- wobei das rotierende Mittel (2) außerhalb eines inneren Volumens des stationären Mittels (10) positioniert ist;

- wobei die Eingriffmittel (8) mindestens auf einer Oberfläche des rotierenden Mittels (2) bereitgestellt werden, die den Schlitz (15) definiert, um zu gewährleisten, dass die Flüssigkeit beim Gelangen durch den Schlitz (15) in eine radiale Richtung eine Oberfläche des rotierenden Mittels (2), die mit dem Eingriffmittel (8) versehen ist, passiert hat,

- und wobei in dem Reservoir (102) Schwerkraft die Flüssigkeit zum Eingriff mit der ersten Oberfläche (6) des rotierenden Mittels (2) zwingt.

2. Flüssigkeits-Behandlungs-Einrichtung (100) nach Anspruch 1, wobei die Flüssigkeit Wasser ist oder insbesondere wobei die Flüssigkeit Ballastwasser ist.

3. Flüssigkeits-Behandlungs-Einrichtung (100) nach einem der Ansprüche 1 oder 2, wobei das Eingriffmittel (8) am Rand der kreisförmigen Scheibe (3) bereitgestellt wird.

4. Flüssigkeits-Behandlungs-Einrichtung (100) nach Anspruch 3, wobei das Eingriffmittel (8) bei einem Abstand bereitgestellt wird, der zwischen 70% und 100% des Gesamtabstands von der Mitte bis zur Außenkante der ersten Oberfläche (6) oder insbesondere zwischen 80% und 100% des Gesamtabstands oder insbesondere zwischen 90% und 100% des Gesamtabstands oder insbesondere zwischen 95% und 100% des Gesamtabstands beträgt, und wobei der verbleibende mittige Teil des Gesamtabstands kein Eingriffmittel (8) aufweist.

5. Flüssigkeits-Behandlungs-Einrichtung (100) nach einem der vorangehenden Ansprüche, wobei das Eingriffmittel (8) mindestens einen Vorsprung umfasst.

6. Flüssigkeits-Behandlungs-Einrichtung (100) nach Anspruch 5, wobei der Vorsprung in Form von mindestens einem Wolfram- und/oder Wolframcarbid-Korn vorliegt.

7. Flüssigkeits-Behandlungs-Einrichtung (100) nach einem von Anspruch 5 oder 6, wobei das Eingriffmittel (8) in Form einer Vielzahl von Vorsprüngen vorliegt.

8. Verfahren zum Behandeln einer Flüssigkeit, umfassend die Schritte von:

- Bereitstellen einer Menge einer unbehandelten Flüssigkeit, die mit lebenden Organismen kontaminiert ist;
- Bereitstellen einer Flüssigkeits-Behandlungs-Einrichtung (100) nach einem der Ansprüche 1 bis 7;
- Einführen der unbehandelten Flüssigkeit durch die Einlass-Leitung (101) der Flüssigkeits-Behandlungs-Einrichtung (100) in sein Reservoir (102);
- in dem Reservoir (102) Zwingen der Flüssigkeit durch die Schwerkraft mit der ersten Oberfläche (6) des rotierenden Mittels (2) in Eingriff zu kommen, wobei das Eingriffmittel (8) Dreh-Beschleunigung der Flüssigkeit beim Drehen des rotierenden Mittels (2) bereitstellt;
- Bereitstellen einer Behandlung der Flüssigkeit durch Zwingen der unbehandelten Flüssigkeit, durch den Schlitz (15) zu gelangen, wobei die Flüssigkeit in einer radialen Richtung weg von der Rotationsachse (A) zwischen dem rotierenden Mittel (2) und dem stationären Mittel (10) und aus der Flüssigkeits-Behandlungs-Vorrichtung (1) heraus gelangt;

- Ausgeben der behandelten Flüssigkeit durch eine Auslass-Leitung (110).

9. Verwendung einer Flüssigkeits-Behandlungs-Einrichtung (100) nach Ansprüchen 1 - 7 zur Behandlung von Ballastwasser.

**Revendications**

1. Appareil de traitement de liquide (100) pour le traitement de liquide contaminé par des organismes vivants comprenant :

    - un réservoir de traitement de liquide (102),
    - un conduit d'entrée (101) pour permettre au liquide d'être traité pour entrer dans ledit réservoir (102),
    - un dispositif de traitement de liquides (1) avec lequel ledit réservoir (102) est fourni, et
    - un conduit de sortie (110) pour évacuer le liquide traité ;
    - dans lequel ledit dispositif de traitement de liquides (1) comprend :
    - un moyen rotatif (2) ayant une première surface (6) pour recevoir le liquide à traiter et un axe de rotation (A) qui est sensiblement perpendiculaire à la première surface (6), où la première surface (6) est dotée de moyens de mise en prise (8) pour mettre en prise le liquide et fournir l'accélération au liquide lors de la rotation du moyen rotatif (2), et où le moyen rotatif (2) est un disque sensiblement circulaire (3) ayant une zone centrale et un bord périphérique définissant la première surface (6),
    - un moyen stationnaire (10) qui est agencé pour former une frontière intérieure (13) afin de restreindre le liquide sur la première surface (6) du moyen rotatif (2), où les moyens rotatifs (2) tournent par rapport au moyen stationnaire (10), où le moyen stationnaire (10) comprend un collier annulaire (11) qui est suspendu à une distance prédéfinie au-dessus de la première surface (6) du moyen rotatif (2), et le moyen stationnaire (10) est agencé pour définir une fente annulaire ininterrompue (15) entre la première surface (6) du moyen rotatif (2) et une première extrémité (12) du moyen stationnaire (10) permettant au liquide de passer dans une direction radiale s'éloignant de l'axe de rotation (A) entre le moyen rotatif (2) et le moyen stationnaire (10) et sortant du dispositif de traitement de liquides (1) ;
    - où ledit moyen rotatif (2) est positionné à l'extérieur d'un volume intérieur dudit moyen stationnaire (10) ;
    - où les moyens de mise en prise (8) sont au moins fournis sur une zone de surface du moyen rotatif (2) qui définit la fente (15), assurant que lors du passage à travers la fente (15) dans une direction radiale, le liquide a passé une zone de surface du moyen rotatif (2) qui est doté de moyens de mise en prise (8)
    - et où, à l'intérieur du réservoir (102), la gravité force le liquide à se mettre en prise avec la première surface (6) du moyen rotatif (2).

2. Appareil de traitement de liquide (100) selon la revendication 1, où le liquide est de l'eau ou plus spécifiquement où le liquide est de l'eau de ballast.

3. Appareil de traitement de liquide (100) selon l'une quelconque des revendications 1 ou 2, dans lequel les moyens de mise en prise (8) sont fournis à la périphérie du disque circulaire (3).

4. Appareil de traitement de liquide (100) selon la revendication 3, dans lequel les moyens de mise en prise (8) sont prévus à une distance qui est entre 70 % et 100 % de la distance totale du centre au bord périphérique de la première surface (6), ou plus spécifiquement entre 80 % et 100 % de la distance totale, ou plus spécifiquement entre 90 % et 100 % de la distance totale ou plus spécifiquement entre 95 % et 100 % de la distance totale, et où la partie centrale restante de la distance totale est dépourvue de moyens de mise en prise (8).

5. Appareil de traitement de liquide (100) selon l'une quelconque des revendications précédentes, dans lequel le moyen de mise en prise (8) comprend au moins une saillie.

6. Appareil de traitement de liquide (100) selon la revendication 5, où la saillie se présente sous la forme d'au moins un grain en carbure de tungstène et/ou tungstène.

7. Appareil de traitement de liquide (100) selon l'une quelconque revendication 5 ou 6, dans lequel le moyen de mise en prise (8) se présente sous la forme d'une pluralité de saillies.

8. Procédé de traitement d'un liquide comprenant les étapes de :

    - fourniture d'une quantité d'un liquide non traité contaminé par des organismes vivants ;
    - fourniture d'un appareil de traitement de liquide (100) selon l'une quelconque des revendications 1 à 7 ;
    - introduction du liquide non traité à travers le conduit d'entrée (101) de l'appareil de traitement de liquide (100) dans son réservoir (102) ;
    - à l'intérieur du réservoir (102), laisser la gravité forcer le liquide à se mettre en prise avec la première surface (6) du moyen rotatif (2), où les moyens de mise en prise (8) fournissent une accélération de rotation du liquide lors de la rotation de l'élément rotatif (2) ;

- fourniture d'un traitement du liquide en forçant le liquide non traité à passer à travers la fente (15), le liquide passant dans une direction radiale s'éloignant de l'axe de rotation (A) entre le moyen rotatif (2) et le moyen stationnaire (10) et sortant du dispositif de traitement de liquides (1) ;

- évacuation du liquide traité à travers un conduit de sortie (110).

9. Utilisation d'un appareil de traitement de liquide (100) selon les revendications 1 - 7 pour traiter l'eau de ballast.

Fig.1

Fig.2

Fig.3

Fig.4

Fig.5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2007108012 A
- JP 2006102563 A

- JP 2007044567 A

**Non-patent literature cited in the description**

- Shipping Industry Sets Sail: Multi-billion Dollar Ballast Water Treatment System Market. **FREDRICK ROY-AN.** Frost & Sullivan Market Insight. 01 June 2010